(19) Europäisches Patentamt / European Patent Office / Office européen des brevets

(11) **EP 4 379 645 A1**

(12) **EUROPEAN PATENT APPLICATION**

(43) Date of publication:
**05.06.2024 Bulletin 2024/23**

(21) Application number: **23213050.0**

(22) Date of filing: **29.11.2023**

(51) International Patent Classification (IPC):
**G06Q 50/43** (2024.01)    **G07C 5/00** (2006.01)
**G07C 5/08** (2006.01)    **G06Q 50/40** (2024.01)

(52) Cooperative Patent Classification (CPC):
**G06Q 40/08; G06Q 10/0639; G06Q 50/43;**
G07B 15/00; G07C 5/008; G07C 5/0841

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2022 US 202218071176**

(71) Applicant: **Cambridge Mobile Telematics Inc.
Cambridge, MA 02142 (US)**

(72) Inventors:
- **MADDEN, Samuel Ross
  Newton 02459, MA (US)**
- **BRADLEY, William Francis
  Arlington 02476, MA (US)**

(74) Representative: **Fish & Richardson P.C.
Highlight Business Towers
Mies-van-der-Rohe-Straße 8
80807 München (DE)**

(54) **SYSTEM AND METHOD FOR DETECTING RIDESHARING BEHAVIOR**

(57) Systems, methods, and computer programs for detecting ridesharing behavior are disclosed. In one aspect, a method can include actions of obtaining, by one or more computers, telematics data that indicates one or more properties of each of a plurality of prior drives for a driver, determining, by one or more computers and based on the obtained telematics data, a plurality of numerical values that each represents a different drive feature, wherein the numerical value for each drive feature is based on telematics data collected from the plurality of prior drives for the driver, determining, by one or more computers and based on the plurality of numerical values, first data that provides an indication as to whether a current drive (i) is a ridesharing drive, and determining, by one or more computers, a driver classification for the driver based on the first data.

FIG. 1

EP 4 379 645 A1

**Description**

TECHNICAL FIELD

The present disclosure relates to the use of telematics data to detect ridesharing behavior.

BACKGROUND

Ridesharing services such as, e.g., Uber or Lyft, have become increasingly available in recent years. A ridesharing operator, e.g., a person that drives for Uber or Lyft, may use the same vehicle in their professional and personal capacities. In some instances, it may be desirable to readily determine whether an operator of a vehicle is operating the vehicle in their professional or personal capacity.

SUMMARY

According to one innovative aspect of the present disclosure, a method for detecting ridesharing behavior is disclosed. In one aspect, the method can include actions of obtaining, by one or more computers, telematics data that indicates one or more properties of a driver's drive (i), determining, by one or more computers and based on the obtained telematics data, a plurality of numerical values that each represents a different feature of the driver's drive (i), determining, by one or more computers and based on the plurality of numerical values, a probability ($p_i$) that the drive (i) is a ridesharing drive, wherein probability ($p_i$) is based, at least in part, on a prior probability ($p_d$) of one or more prior drives by the driver being a ridesharing drive, and determining, by one or more computers, a driver classification for the driver based on the determined probability ($p_i$).

Other versions include corresponding apparatus, methods, and computer programs to perform the actions of methods defined by instructions encoded on computer readable storage devices.

These and other versions may optionally include one or more of the following features. For instance, in some implementations, the probability ($p_i$) is based on a weighted combination of the plurality of numerical values that each represent a different feature of the drive (i).

In some implementations, the method further comprising one or more of: determining, by one or more computers, first data indicative of an expected distance driven by the driver while ridesharing, determining, by one or more computers, second data indicative of an expected time driven by the driver while ridesharing, or determining, by one or more computers, third data indicative of an expected fraction of a distance or time spent ridesharing by the driver.

In some implementations, the driver classification is based, at least in part, on one or more of the first data, the second data, or the third data.

In some implementations, the driver classification is based, at least in part, on the first data, the second data, and the third data.

In some implementations, the plurality of numerical values that each represents a different feature of the driver's drive (i) include two or more numerical values that each correspond to a particular feature of a drive, wherein the features of the drive comprise two or more of road diversity, stop location diversity, stopping mid-block, door slams, mounted user device, mounted user device tapping, time spent at a parked location, user device plugged in for entire trip, end of trip user device tapping, slower driving at end of drive, loop around block, multi-hour shifts, bipartite structure in trip lengths, or average speed.

According to another innovative aspect of the present disclosure, a method for detecting ridesharing behavior is disclosed. In one aspect, the method can include obtaining, by one or more computers, telematics data that indicates one or more properties of each of a plurality of prior drives for a driver, determining, by one or more computers and based on the obtained telematics data, a plurality of numerical values that each represents a different drive feature, wherein the numerical value for each drive feature is based on telematics data collected from the plurality of prior drives for the driver, determining, by one or more computers and based on the plurality of numerical values, first data that provides an indication as to whether a current drive (i) is a ridesharing drive, and determining, by one or more computers, a driver classification for the driver based on the first data.

Other versions include corresponding apparatus, methods, and computer programs to perform the actions of methods defined by instructions encoded on computer readable storage devices.

These and other versions may optionally include one or more of the following features. For instance, in some implementations, the first data is a probability ($p_i$) that the current drive (i) is a ridesharing drive.

In some implementations, the first data is a numerical value that, when applied to one or more thresholds, provides an indication as to whether the current drive (i) is a ridesharing drive.

In some implementations, the probability ($p_i$) is based, at least in part, on a prior probability ($p_d$) that one or more of the prior drives by the driver was a ridesharing drive.

In some implementations, the probability ($p_i$) is based on a weighted combination of the plurality of numerical values that each represent a different feature of the current drive (i).

In some implementations, the method further comprising one or more of: determining, by one or more computers, second data indicative of an expected distance driven by the driver while ridesharing, determining, by one or more computers, third data indicative of an expected time driven by the driver while ridesharing, or determining, by one or more computers, fourth data indicative of an expected fraction of a distance or time spent ridesharing by the driver.

In some implementations, the driver classification is based, at least in part, on one or more of the second data, the third data, or the fourth data.

In some implementations, the plurality of numerical values that each represents a different feature of the driver's drive (*i*) include two or more numerical values that each correspond to a particular feature of a drive, wherein the features of the drive comprise two or more of road diversity, stop location diversity, stopping mid-block, door slams, mounted user device, mounted user device tapping, time spent at a parked location, user device plugged in for entire trip, end of trip user device tapping, slower driving at end of drive, loop around block, multi-hour shifts, bipartite structure in trip lengths, or average speed.

These, and other innovative aspects of the present disclosure, are described in more detail below in the detailed description, the drawings, and in the claims.

BRIEF DESCRIPTION OF DRAWINGS

FIG. 1 is a diagram of a system for detecting rides haring behavior using telematics data.
FIG. 2 is a flowchart of a process for detecting ridesharing behavior using telematics data.
FIG. 3 is a flowchart of another process for detecting ridesharing behavior using telematics data.
FIG. 4 is a block diagram of system components that can be used to implement a system for detecting ridesharing behavior.

DETAILED DESCRIPTION

The present disclosure is directed to methods, systems, and computer programs for detecting ridesharing behavior using telematics data. Telematics data can include, for example, data collected by a device that indicates properties of a driver's vehicular trip. Such properties of a driver's vehicular trip can include, for example, vehicle acceleration, vehicle speed, vehicle trajectory, or mapmatched location of the vehicle with road segment. The present disclosure can estimate a probability ($p_i$) that a particular drive (*i*) is a ridesharing driver as opposed to, for example, a personal drive. The probability ($p_i$) can be determined as function of telematics data of the particular drive (*i*), a telematics data obtained from a plurality of historical by the driver, or a combination thereof.

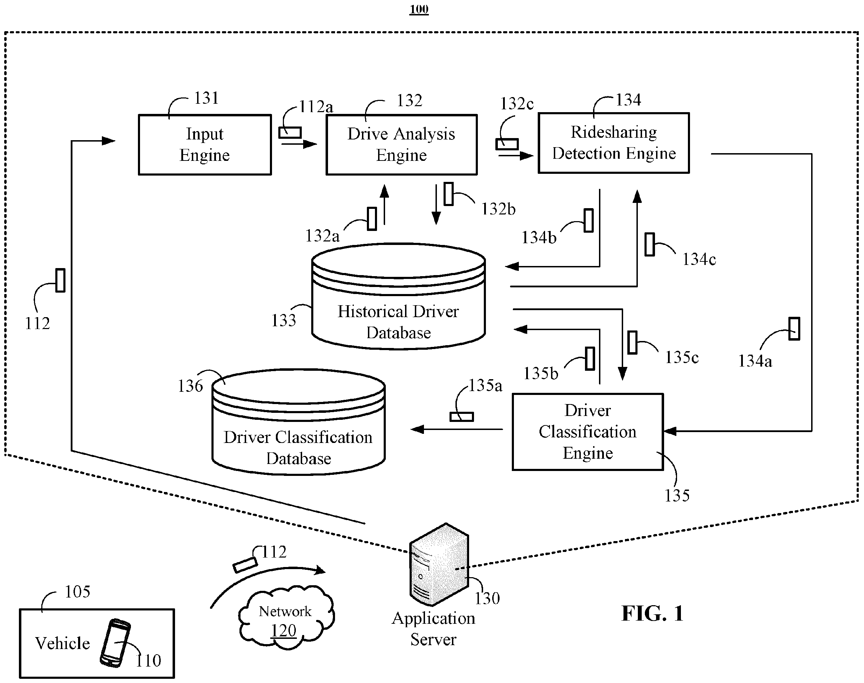

FIG. 1 is a diagram of a system 100 for detecting rides haring behavior using telematics data. The system 100 can include a user device 110, a network 120, an application server 130, an input engine 131, a drive analysis engine 132, a historical drive database 133, a ridesharing detection engine 134, a driver classification engine 135, and a driver classification database 136. For purposes of the present disclosure, an "engine" can include software processing engines, hardware processing engines, or any combination thereof necessary to realize the functionality attributed to the particular engine herein.

The system 100 is configured to obtain and analyze telematics data describe a particular drive (*i*) of a driver in the vehicle 105. The telematics data 112 can be obtained from a user device 110 that is located in the vehicle 105. In some implementations, the user device 110 can include, for example, a smartphone. However, the present disclosure is not so limited, and any user device can be used for generating and transmitting telematics data can be used including, e.g., a tablet computer, a laptop computer, or the like.

The user device 110 can transmit the telematics data 112 to an application server 130 using one or more networks 120. The networks 120 can include, for example, one more cellular networks, one or more LANs, one or more WANs, the Internet, or any combination thereof. Telematics data 112 can include any data describes properties of a drive (*i*). Such data can include, for example, data describing vehicle acceleration, vehicle speed, vehicle trajectory, or mapmatched location of the vehicle with road segment. In some implementations, the telematics data may be based on GPS data obtained from the user device 110.

In some implementations, the telematics data can include, for example, driver identification information such as a driver_id that can be used to associated particular telematics data 112 with a particular driver of the vehicle 105. Such a driver_id can be required when the system 100 is deployed to track large numbers of drivers in a particular geographic area.

The application server 130 can include one or more computers that are communicatively coupled to the user device 110. Communicatively coupled means that the application server 130 and the user device 110 are connected via one or more networks 120 in a manner that enables the application server 130 to receive data from the user device 110.

The input engine 131 is configured to obtain the telematics data 112 transmitted by the user device 110. The input engine 131 can include, for example, one or more application programming interfaces that function as an interface between the application server 130 and the user device 110. The input engine 131 can organize the received telematics data 112 based on the entity of the driver. In some implementations, this can be achieved using a driver_id.

The input engine 131 can also be configured to format the received telematics data 112 into telematics data 112a having a format that is expected by the drive analysis engine 132. In some implementations, this can include removing one or more headers of the data structure used to transmit the telematics data from the user device 110 to the application server 130. In yet other implementations, however, no formatting of the telematics data is necessary and the telematics data 112a can be the same format as the telematics data 112. The input engine can provide the telematics data 112a for a particular driver of the vehicle 105 as an input to the drive analysis engine 132.

The drive analysis engine 132 is configured to receive telematics data 112a from the input engine 131 and determine, based on the obtained telematics data, a plurality of numerical values that each represents a different feature of the driver's drive ($i$). The plurality of numerical values that each represents a different feature of the driver's drive ($i$) can include two or more numerical values that each correspond to a particular feature of a drive, wherein the features of the drive comprise two or more of road diversity, stop location diversity, stopping mid-block, door slams, mounted user device, mounted user device tapping, time spent at a parked location, user device plugged in for entire trip, end of trip user device tapping, slower driving at end of drive, loop around block, multi-hour shifts, bipartite structure in trip lengths, or average speed. A driver's drive ($i$) can also be referred to as a trip herein.

In some implementations, each of the two or more numerical values can be represented by a probability indicating that a likelihood that a particular drive feature has been detected for a particular drive. Alternatively, in some implementations, each of the two or more numerical values can be represented by a first value (e.g., 1) indicating that the drive analysis engine has detected the occurrence of the drive feature in a particular drive or a second value (e.g., 0) indicating the drive analysis engine 132 has not detected an occurrence of the drive attribute in a particular drive.

Each drive feature provides an indication as to a likelihood that a particular drive ($i$) is a ridesharing drive, a level of risk associated with the drive, or a combination thereof. For examples, each drive feature is a signal that can be processed by the ridesharing detection engine 134 in order to infer a likelihood that the driver of a vehicle 105 rideshare driver. As a rideshare driver, the driver would generally carry a higher level of risk for an insuring party. Thus, the if the ridesharing detection engine 134 determines that there is a high likelihood that the drive ($i$) is a ridesharing drive, that determination also indicates that the driver of the vehicle 105 is a ridesharing driver that is subject to a higher level of risk than a non-ridesharing driver.

Accordingly, the drive features generated and provided as an input to the ridesharing detection engine 134 can provide an indication as to a likelihood that the driver of the vehicle 105 is a rideshare driver, an indication of increased (or heightened) risk associated with the driver 105, an indication of a decreased (or lower) risk associated with the driver, or a combination of one or more thereof. In addition, other drive features such as idling time, a priori trip probability, or a combination thereof, can be used to increase or decrease a level of risk associated with a driver that is otherwise determined to be a likely rideshare driver.

Road Diversity Value

In some implementations, for example, the drive analysis engine 132 can be configured to determine a road diversity value based on telematics data. Road diversity can be a numerical value that indicates an extent to which the driver of the vehicle 105 drove on new road segments. The road diversity value is indicative ridesharing behavior as, during ridesharing, a driver is more likely to drive on a new road segment.

The drive analysis engine 132 can determine a value indicative of road diversity by accessing 132a a historical driver database 133 to obtain historical data 132b about the driver of the vehicle 105. For example, in the historical driver database 113, the system 100 can store and track, for each driver, a list of road segments $R_1,..., R_n$ as well as a count of the number of times each segment has been visited across a predetermined window of time. In some implementations, for example, the window of time can be equal to 60 days, with counts $C_1,...,C_n$ for each day of the 60 days, where $C=\sum_{i=1}^{n} C_i$. The drive analysis engine 132 can then accessed the aforementioned data in the historical driver database 133 and determine, based on the accessed data, a diversity score, such as $\left[\sum_{i=1}^{n} \left(\frac{c_i}{c}\right) \log_2 \left(\frac{c_i}{c}\right)\right] / \log_2(C)$.

If the number of trips and/or road segments does not satisfy a predetermined threshold, the drive analysis engine 132 can determine that driver of the vehicle 105 has not driven on a threshold number of new road segments to indicate ridesharing behavior. In some implementations, this can be indicated in the drive analysis engine's output data 132c by setting a value corresponding to road diversity to 0. Alternatively, if the driver of the vehicle 105 was determined to have road diversity, the value corresponding to road diversity in the output data 132c can be set to 1. However, these values are merely examples. Any value can be used to represent the corresponding road diversity of the driver of the vehicle 105.

Stop Location Diversity Value

In some implementations, the drive analysis engine 132 can be configured to determine a stop location diversity value based on telematics data. The stop location diversity value can be a numerical value that indicates a variety of locations where the driver of the vehicle 105 stopped during a drive. The stop location diversity value is indicative of ridesharing behavior as, during ridesharing, a driver of the vehicle 105 is more likely to stop at a variety of locations that the driver has never stopped at before.

The drive analysis engine 132 can determine a value indicative of stop location diversity by accessing 132a a historical driver database 133 to obtain historical data 132b about the driver of the vehicle 105. For example, in the historical driver database 133, the system 100 can store and track, for each driver, a terminal location of the driver's trips within some window of time. In some implementations, the window of time can be, for example, 60 days. Then, the drive analysis engine 132 can determine an extent to which the terminal location(s) of the current drive (i) differs from previously recorded drives within the window of time.

In some implementations, the drive analysis engine 132 can determine whether the terminal location of a current drive (*i*) differs from all previously recorded locations by at least a distance D such as 300 meters. In some implementations, if the terminal location of the current drive (*i*) differs from all previously recording locations by at least a distance D, the drive analysis engine 132 can determine that the driver of the vehicle 105 has stop location diversity. This can be indicated in the output data 132c by setting a value corresponding to stop location diversity to 1. Alternatively, if the drive analysis engine 132 determines that the terminal location of the current drive (*i*) does not differ from all previously recorded locations by at least a distance D, then the drive analysis engine 132 can determine that the driver of the vehicle 105 does not have stop location diversity. In such instances, this can be indicated in the output data 132c by setting a value corresponding to stop location diversity to 0. Alternatively, if a number of historical trips of the driver of the vehicle 105 that have been observed and stored in the historical database 133 does not satisfy a predetermined threshold, the drive analysis engine can set, in the output data 132c, a value corresponding to the stop location diversity to 0 for all trips.

### Stopping Mid-Block Value

In some implementations, the drive analysis engine 132 can be configured to determine a stopping mid-block value based on telematics data. The stopping mid-block value can be a numerical value that indicates whether a driver of the vehicle 105 paused briefly mid-trip in the middle of a block while a passenger enters the vehicle. Such mid-block stoppages are indicative of ridesharing behavior as, during ridesharing, a driver of the vehicle 105 is more likely to stop mid-block to allow a passenger to enter the vehicle 105.

The drive analysis engine 132 can determine the stopping mid-block value by using a map-matched trajectory and a map database of intersections. For example, first the drive analysis engine 132 can detect, based on the received telematics data 112, a distance between points of a stored map where the vehicle speed is zero for at least T seconds, where T may be, for example, 20 seconds. Then, after determining an occurrence of a vehicle speed of zero for at least T seconds, the drive analysis engine 132 can determine, using the map database of intersections, whether the points on the map where the vehicle 105 had a speed of zero for at least T seconds are located more than some distance such as, e.g., 100 meters, from the nearest intersection. If the drive analysis engine 132 determines that the points on the map where the vehicle 105 had a speed of zero for at least T seconds are located more than some distance from the nearest intersection, then data corresponding to the mid-block value in the output data 132c can be set to "1" by the drive analysis engine 132. Alternatively, the drive analysis engine 132 can set data corresponding to the mid-block value in the output data 132c equal to "0."

### Door Slam Value

In some implementations, the drive analysis engine 132 can be configured to determine a door slam value based on telematics data. The door slam value can be a numerical value that indicates a likelihood that a passenger entered the vehicle 105 mid-trip and shut a door of the vehicle 105. In some implementations, the drive analysis engine 132 can determine a door slam value, based on the received telematics data 112, by detecting (i) a brief lateral acceleration to the vehicle 105 after prior stop and (ii) a spike in barometric air pressure. If this is detected mid trip, the door slam score in the output data 132c is set to 1, else the door slam score in the output data 132c is set to 0.

### Mounted User Device Value

In some implementations, the drive analysis engine 132 can be configured to determine a mounted user device 110 value based on telematics data. The mounted user device 110 value can be a numerical value that indicates a likelihood that driver's user device (e.g., a smartphone) is mounted across a current drive (i) by the driver of vehicle 105, multiple drives by the driver of vehicle 105, or all drives driven by the driver of vehicle 105. In some implementations, the drive analysis engine 132 can determine whether the user device 105 is mounted for an entire drive, multiple drives, or all drives based on the orientation of user device 105 during each of the one or more drives. In some implementations, if the user device 110 is mounted for an entire drive, the mounted user device 110 value in the output data 132c can be set to 1, else the mounted user device 110 value in the output data 132c can be set to 0.

### Mounted User Device Tapping Value

In some implementations, the drive analysis engine 132 can be configured to determine a mounted user device 110 tapping value based on telematics data. An indication that the user device 110 is mounted can be determined, as previously described, based on the orientation of the user device 110 during a drive. Alternatively, or in addition, the drive analysis engine 132 can determine a time driver spends tapping on a user device 110 screen. In some implementations, for example, the drive analysis engine 132 can determine a likelihood that a drive is a ridesharing drive or a non-ridesharing drive based on the amount of time a driver of a vehicle 105 taps on a screen of a mounted user device 110. In some implementations, the more time a driver of the vehicle 105 spends tapping on the screen of a user device 110 during a drive, the more likely that the drive is a rideshare driver. In such implementations, if the driver of the vehicle 105 taps on the screen of the user device 110 taps on the screen of a mounted user device 110 for more than a threshold amount of time, then the drive analysis engine 132 can set the mounted user device 110 tapping value in the output data 132c to 1, else the drive analysis engine 132 can set the mounted user device 110 tapping value in the output data 132c to 0.

Likely Spots Value

In some implementations, the drive analysis engine 132 can be configured to determine a likely spots value based on telematics data 112. The likely spots value can provide an indication as to whether a driver has parked in and then returned to a particular location having one or more defining characteristics. Such a likely spots value can be indicative of a ridesharing drive, as rideshare drivers are much more likely to park in and return to certain characteristic areas, such as airports.

The system 100 can determine a likely spots value in a number of different ways. For example, in some implementations, after a vehicle 105 stops, the drive analysis engine 132 can obtain the location of the stopped vehicle from the telematics data 112. Then, the drive analysis engine 132 can determine, using the historical driver database 133 whether the driver of the vehicle 105 has stopped the vehicle 105 in that location before. For example, the drive analysis engine 132 can determine whether the driver has stopped the vehicle on another day, previously on the same day, or the like. This can be achieved by querying 132a the historical driver database 133 and then analyzing the query results 132b. Then, if the vehicle 105 remains stopped in the returned location for a predetermined period of time, then the likely spots score value in the output data 132c can be set to a first value such as "1." In the alternative, the likely spot value in the output data 132c can be set to "0." In some implementations, the threshold period of time can be, e.g., greater than 10 minutes and less than 90 minutes.

Device Plugged in For Entire Trip Value

In some implementations, the drive analysis engine 132 can be configured to determine a device-plugged-in-entire-trip value based on telematics data 112. The device-plugged-in-entire-trip value is indicative of whether a user device 110 in the vehicle 105 was plugged in for more than a threshold amount of a drive

(i). In some implementations, the threshold amount of the drive is 95%. If the phone is plugged in for more than 95% of the trip, the likelihood of ridesharing is increased. If, for a particular drive, the user device was plugged in for more than a threshold amount of the drive such as, e.g., more than 95%, then the likelihood of the drive being a ridesharing drive increases.

In some implementations, if the drive analysis engine 132 determines, based on the telematics data 112, that the user device 110 of the vehicle 105 was plugged in for more than a threshold amount of time such as, e.g., more than 95% of the drive, then the drive analysis engine 132 can set the device-plugged-in-entire-trip value in the output data 132c to 1. Alternatively, if the drive analysis engine 132 determines, based on telematics data 112, that the user device 110 was not plugged in for more than a threshold amount of time, then the drive analysis engine 132 can set the device-plugged-in-entire-trip value in the output data 132c to "0."

End Of Trip Device Tapping

In some implementations, the drive analysis engine 132 can calculate, based on the telematics data 112, an end-of-trip-device-tapping value. The end-of-trip-device-tapping value can provide an indication as to whether a predetermined threshold number of user device taps during a particular drive occurred at the end of the particular drive. Tapping on a user device 110 that largely occurs at the end of a trip is indicative of a rideshare drive.

In some implementations, if the drive analysis engine 132 determines, based on the telematics data 112, that more than a predetermined threshold number of user device taps during a particular drive occurred at the end of the particular drive, then the drive analysis engine 132 can set the end-of-trip-device-tapping value in the output data 132c to "1." Alternatively, if the drive analysis engine 132 determines, based on the telematics data 112, that less than a predetermined threshold number of user device taps during a particular drive occurred at the end of the particular drive, then the drive analysis engine 132 can set the end-of-trip-device-tapping value in the output data 132c to "0."

In a similar manner, the drive analysis engine 132 can determine a start-of-trip-device tapping value. Such a value can indicate whether a majority of the taps on a user device 110 occurred at the beginning of a particular drive. A determination that a majority of taps on a user device occur at the beginning of a particular drive is also indicative of a ridesharing drive. Such a value is determined and set in the same manner as the end-of-trip-device tapping value, with the exception of analyzing taps at the beginning of a drive instead of the end of a drive.

In some implementations, the output data 132c can include an end-of-trip-device-tapping value, a start-of-trip-device-tapping value, or both.

Slower Drive At End Value

In some implementations, the drive analysis engine 132 can determine, based on the telematics data 112, a slower-driving-at-end-of-drive value. A slower-driving-at-end-of-drive value is indicative of a ridesharing drive as a driver of the vehicle 105 will slow down, but not stop, near end of a drive as the driver looks for the passenger to be picked up for the ridesharing drive. The drive analysis engine 132 can determine that the vehicle 105 slows down at the end of the trip by analyzing the telematics data 112 that includes acceleration data, speed data, and end of drive (e.g., location of eventual stop) data.

In some implementations, if the drive analysis engine 132 determines that the vehicle 105 has slowed, but has not stopped, prior to the end of the drive, the drive analysis engine 132 can set the slower-driving-at-end-of-drive value in the output data 132c to "1." In the alternative, if the drive analysis engine 132 determines that the vehicle 105 has only slowed to stop near the end of the drive, the drive analysis engine 132 can set the slower-driving-at-end-of-drive value in the output data 132c to "0."

Loop Back Around Value

In some implementations, the drive analysis engine 132 can determine, based on the telematics data 112, a loop-back-around value. The loop-back-around value is indicative of a driver missing an attempted pick up of a passenger and then looping around the block again to return and attempt pick up of the passenger again. Such looping techniques are indicative of a rideshare drive, as a driver will circle around the block in another attempt to pick up a passenger seeking a rideshare ride.

The drive analysis engine 132 can make such a determination based on the telematics data 112 and historical route information stored in the historical driver database 133. For example, the drive analysis engine 132 can compare a current location and trajectory from the telematics data 112 with a recent history of the vehicle's route information such as, e.g., travel locations, map data, trajectory, or a combination thereof, stored in the historical driver database 133. Such data describing the recent history of the vehicle's route information may be obtained, by the drive analysis engine 132 and from the historical driver database 133, by the drive analysis engine 132 querying 132a the historical driver database 133 and comparing data obtained via the query results 132b to data obtained via the telematics data 112.

In some implementations, if the drive analysis engine 132 determines that the driver has missed an attempted pick up of a passenger and looped around the block again to attempt pick up of the passenger again, then the drive analysis engine can set the loop-back-around value in the output data 132c to "1." In the alternative, drive analysis engine 132 can set the loop back around value in the output data 132c to "0."

Multi-Hour Shift Value

In some implementations, the drive analysis engine 132 can determine, based on telematics data 112, a multi-hour-shifts value. A multi-hour-shift value provides an indication as to whether a driver spends a predetermined amount of a predetermined time period driving a vehicle 105. If a driver is found to drive a vehicle 105 for greater than, or equal to, a predetermined amount of a predetermined time period, then the drive analysis engine 132 can determine that the drive is a rideshare drive. The drive analysis engine 132 can determine whether a driver of the vehicle 105 based on telematics data 112 such as acceleration and velocity of the vehicle 105.

By way of example, in some implementations, the predetermined amount is 75% and the time period is 8 hours. In such implementations, if the drive analysis engine 132 determines that the driver of the vehicle 105 has driven 75%, or more, of the time during an 8 hour period, then the drive analysis engine 132 can set the multi-hour-shifts value in the output data 132c to "1." Alternatively, if the drive analysis engine 132 determines that the driver of the vehicle 105 has driven less than 75% of the time during an 8-hour period, then the drive analysis engine 132 can set the multi-hour-shifts value in the output data 132c to "0."

Bipartite Structure In Trip Lengths

In some implementations, the drive analysis engine 132 can determine, based on the telematics data 112, a bipartite-structure-in-trip-lengths value. The bipartite-structure-in-trip-lengths value is a value indicating a number of occurrences where a driver has a variation in trip lengths across multiple different pairs of drives. For example, a ride share driver is likely to perform multiple trips comprising a pair of drives where an initial drive (*i*) is relatively short in comparison to an immediately subsequent drive. Morever, for each pair of drives, the second or subsequent drive in the pair is likely to be of vary drive lengths for each pair of drives. In some implementations, the bipartite-structure-in-trip-lengths value can be a number times such a pair of drives have been performed by a driver. This can be an actual count of such drives or it can be a ratio of all drives performed by the drive having such characteristics. A driver that has performed multiple drives of varying lengths is more likely to be a rideshare driver than a non-rideshare driver.

A bipartite structure of trip lengths (also referred to herein as "drive lengths") is an indication of ridesharing behavior, as it is common for a rideshare driver to wait for a ride and then be assigned a nearby passenger. In addition, a typical ridesharing application on the user device 110 will try to minimize the time and/or distance between a driver and a passenger to provide an efficient trip. To determine a length of a trip, the drive analysis engine 132 can first analyze telematics data 112 to determine an arrival of a passenger using techniques described herein such as, e.g., stopping mid-block, door slam, slow driving, and looping around the block. Then, the drive analysis engine 132 can determine an end of the trip using, e.g., data communicated from a ridesharing application on the user device 110 indicating that the trip or drive has ended. Then, based on such data, the drive analysis engine 1332 can determine a trip or drive length of each subsequent trip or drive, which for ridesharing is typically random in length. In some implementations, distributions between the first part of the trip (with a shorter distribution) and the second part (with a typical distribution) is distinctive across multiple trips.

In some implementations, the drive analysis engine 132 can determine, based on the telematics data 112, that has performed a certain number of drive pairs having the aforementioned bipartite ride structure. In such instances, the drive analysis engine 132 can set the bipartite-structure-in-trip-lengths value in the output data 132c to "1" if a driver has performed more than a threshold number of bi-partite structured rides. In all other scenarios, the drive analysis engine 132 can set the bipartite-structure-in-trip-lengths value in the output data 132c to "0."

Average Speed

In some implementations, the drive analysis engine 132 can determine, based on telematics data 112, an average speed for a driver a period of time. An average speed value can be used to indicate where a driver has driven for more than a threshold period of time and, during that period of time, the driver has driven at an average speed that is less than a predetermined threshold speed. Such characteristics can provide an indication that a driver is a ridesharing driver, as ridesharing drivers, when driving for long durations, typically have an average speed that is lower. For example, a ridesharing driver may do a multi-hour shift, where the ride sharing driver mostly drives in the city with an average speed of, for example, 25 mph. In contrast a non-ridesharing driver, if they drive for a long period of time, the non-ridesharing driver will almost always drive at freeway speeds with a much higher average speed.

Accordingly, in some implementations, the drive analysis engine 132 can determine, based on the telematics data 112, that as performed whether the drive has had a number occurrences where driver has driven for more than a threshold period of time and below a threshold average speed. In such instances, the drive analysis engine 132 can set average speed value in the output data 132c to "1" if a driver has performed more than a threshold number of that were longer than a threshold duration and below a predetermined average speed. In all other scenarios, the drive analysis engine 132 can set the average speed value in the output data 132c to "0."

Thus, the output data 132c is indicative of a plurality of drive ($i$) features represented by a plurality of different values in the output data 132c. In some implementations, the output data 132c may be represented in a vector of values with each particular value reflecting whether a corresponding feature of a ridesharing drive is present or absent in the drive ($i$). While each value used to represent the presence or absence of a particular ridesharing feature may be a 1 or a 0, the present disclosure is not so limited. Instead, the value used to indicate whether a particular ridesharing feature is present or absent in a particular drive can include a probability indicating a likelihood that each respective ridesharing feature is present or absent in a particular drive ($i$).

The ridesharing detection engine 134 is configured to receive the output data 132c generated by the drive analysis engine 132 and determine, based on the output data 132c, a probability ($p_i$) that the drive ($i$) is a ridesharing drive. In some implementations, the ridesharing detection engine 134 can determine the probability ($p_i$) by calculating a weighted combination of the values corresponding to each particular ridesharing feature in the output data 132c. In such implementations, the weight combination of the values from the output data 132c can provide a probability indicating a likelihood that a particular drive ($i$) is a ridesharing drive. The weight combination of values in the output data 132c can be achieved in a number of different ways. For example, in some implementation the weight combination numerical values for ridesharing features in output data 132c can include individual modification by such methods as truncation, logistic transformation, polynomial transformation, quantile transformation or table lookup. In some implementations, one or more of the values corresponding to ridesharing features found in output data 132c can also provide an aggregate estimate of whether or not the driver spends a significant amount of time engaged in ridesharing behavior as opposed to, or in addition to, determining if an individual drive ($i$) involves ridesharing behavior.

In some implementations, each feature is intended to operate in an "untrained mode" (i.e., it can provide an effective detection of ridesharing behavior on any driver based on a single drive). As more data is collected on an individual driver, the feature parameters of each feature, along with the method in which they are combined, may be customized to improve accuracy. The feature optimization can be done by using all features save one to predict time spent ridesharing. The parameters of the remaining feature can be modified to match that prediction. The global weight optimization can be performed by holding out two or more features and optimizing the relative weight between them in the same fashion.

In some implementations, the ridesharing detection engine 134 can provide the output data 134a corresponding to a probability ($p_i$) that the current drive is a rideshare drive to the driver classification engine 135. In other implementations, the ridesharing detection engine 134 can adjust the probability ($p_i$) based on the prior probability ($p_d$) in order to take into account historical drives of the driver of vehicle 105 in the determination of a likelihood that the driver is a rideshare driver. In other implementations, the ridesharing detection engine 134 provides the prior probability ($p_d$) to the driver classification, once the prior probability ($p_d$) has been updated to account for the current probability (pi).

In some implementations, each probability (pi) for each drive of a driver is stored. In such implementations, the ridesharing detection engine 134 can determine a prior probability ($p_d$) for the driver based on each of the previously stored probabilities (pis). In other implementations, storing the probability (pi) can include dynamically updating the running value for $p_d$ after each driver of the driver. In such implementations, the value of each respective $p_i$ calculated in the past is lost, but the aggregate representation of those values remains in the value of $p_d$. In some implementations, the aggregate value of $p_d$ can be represented as an average of prior $p_d$ and current $p_i$, a weighted average of $p_d$ and current $p_i$, an exponentially weighted moving average of a $p_d$ and current $p_i$, a mean value of $p_d$ and current $p_i$, a median value of $p_i$s, or the like. In the base case (i.e., a second drive of the driver), the first $p_d$ is the $p_i$ of the driver's first drive. The ridesharing detection engine 134 can store or update a $p_i$ or $p_d$ value using one or more queries 134b. The ridesharing detection engine 134 can obtain data from the historical driver database 133 using a query 134b and receiving query results 134c.

The driver classification engine 135 can classify the driver of the vehicle 105 into one or more driver classifications based on the probability that the driver of the vehicle 105 is a rideshare driver. The probability that the driver is a rideshare driver can be indicated to the driver classification engine 135 using $p_i$, $p_d$, or other combination thereof. In some implementations, the classifications can include a first classification indicating that the driver of vehicle 105 is likely a rideshare driver or a second classification indicating that the driver is likely not a rideshare driver. In some implementations, the classifications can be based on a level of insurance risk associated with the driver of vehicle 105. For example, the categories can be low-risk, moderate-risk, high-risk, with the higher levels of risk indicating that the driver should be required to pay higher insurance premiums as rideshare driver. However, the present disclosure is not limited to such classifications and any classifications can be used.

The driver classification engine 135 can classify the driver of the vehicle 105 using one or more thresholding mechanisms. For example, in some implementations, the driver classification engine 135 can compare the probability that the driver is a rideshare driver ($p_i$, $p_d$, or other combination thereof) to a threshold. In such implementations, if the probability that the driver is a rideshare driver satisfies the predetermined threshold (e.g.,

probability > .75), then the driver can be classified as a rideshare driver. Alternatively, if the probability that the driver is a rideshare driver does not satisfy the predetermined threshold (e.g., probability < .75), then the driver can be classified as a non-rideshare driver. A probability, or other value, can satisfy a threshold if it exceeds the threshold or falls below the threshold, based on the mathematical design of the probability calculations and thresholds. Such use of thresholding can be similarly applied to each of the thresholding comparisons described herein.

Likewise, in some implementations, if the probability that the driver is a rideshare driver satisfies a first predetermined threshold (e.g., < 1) and a second predetermined threshold (e.g., > .75) (e.g., > .75 and < 1), then the driver of vehicle 105 can be classified as a driver that is a high insurance risk. Alternatively, if the probability that the driver is a rideshare driver does not satisfy the second predetermined threshold (e.g., > .75) and satisfies a third predetermined threshold (e.g., > .25) (e.g., probability not > .75 and probability > .25), then the driver of vehicle 105 can be classified as a driver that is a moderate insurance risk. Alternatively, if the probability that the driver is a rideshare driver does not satisfy the third predetermined threshold (e.g., > .25) and satisfies the fourth predetermined threshold (e.g., > 0) (e.g., probability not > .25 and probability > 0), then the driver of vehicle 105 can be classified as a low insurance risk. As indicated above, these thresholds and relationships between the thresholds should not be viewed as limiting. Instead, each respective thresholds and relations between the thresholds can be designed in order to categories drives into respective categories based on the determined probability of the driver being a rideshare driver that is received from the ridesharing detection engine 134 or an adjustment to the probability determined by the driver classification engine 135.

In some implementations, the driver classification engine 135 can adjust a probability of the driver being a rideshare driver 134a received from the ridesharing detection engine 134. For example, the driver classification engine 135 can adjust the probability that the driver of vehicle 105 is a rideshare driver to indicate a lowered or heightened risk associated with the driver of vehicle 105. In some implementations, the driver classification engine 135 can determined a heightened level or risk associated with the driver of vehicle 105 based on an idling time value. The driver classification engine 135 can determine the idling time value based on the telematics data 112. The idling time value can provide an indication as to whether a driver of the vehicle 105 has spent time idling between ridesharing drives.

In some implementations, driver classification engine 135 can determine an idling time value by evaluating telematics data 112 related to two drives. For example, driver classification engine 135 can obtained data corresponding to two successive drives that have been determined to likely be ridesharing drives. This obtained data can include, for example, current telematics data 112 collected for a current drive (*i*) and historical drive data obtained 135b, 135c, by the driver classification engine 135, from the historical drive database 133 using one or more queries 135ba. Then, after a determination by the driver classification engine 135 that the two drives are ridesharing drives (e.g., current drive probability $p_i$ received from ridesharing engine is > .9 and prior drive probability $p_i$ stored in historical driver database 133 is > .9), the driver classification engine 135 can determined if the time elapsed between the first drive and the second drive is less than a predetermined threshold (e.g., time less than 40 minutes).

If the driver classification engine 135 determines that the time elapsed between the first ridesharing drive and the second ridesharing drive is less than the predetermined threshold (e.g., < 40 minutes), then the driver classification engine 135 can determine that the driver has likely been waiting in the vehicle 105 between the two ridesharing trips. In such instances, the driver classification engine 135 can determine that the driver of the vehicle 105 poses an elevated insurance risk. This is because, for example, if the vehicle 105 is struck while at rest, there is a chance they may generate bodily injury claim. In contrast, if the driver of vehicle 105 left their car as would be typical for a personal driver, that risk is essentially eliminated. As a result, the time waiting in the vehicle 105 between ridesharing trips provides an indication of risk associated with a rideshare driver.

In the alternative, if the driver classification engine 135 determines that the time elapsed between the first ridesharing drive and the second ridesharing drive is greater than the predetermined threshold (e.g., > 40 minutes), then the driver classification engine 135 can determine that the driver has likely not been waiting in the vehicle between two ridesharing trips. In such implementations, the driver classification engine 135 may not alter the probability 134a of a rideshare driver received from the ridesharing engine 134 prior to classification of the driver. Alternatively, in some implementations and in such instances, the driver classification engine 135 can modify the probability received from the ridesharing detection engine 134 to indicate a lower level of insurance risk associated with the driver of the vehicle 105. Such reductions in associated risk can be used as an incentive to drivers to exit vehicles between ridesharing trips.

The driver classification engine 135 can store data 135a corresponding to a classification of the driver of vehicle 105 in driver classification database 136. The driver classification data can include data classification for each respective driver analyzed by system 100. In some implementations, the driver classification database 136 can be accessible to other computers via network 120. For example, in some implementations, one or more insurance companies can access driver classification database 136 in order to obtain risk classifications of drivers for using in calculating insurance premiums. In other implementations, the application server 130 can be hosted, e.g., by an insurance company or other entity with no requirement of third-party access.

In other implementations, the driver classification engine 135 can perform driver classification in a less structured manner. For example, in some implementations, the driver classification engine 135 can calculate data corresponding to one or more risk metrics for the driver of vehicle 105 based on the probability pi received from the ridesharing detection engine 134. Then, a level of risk associated with the driver of the driver classification engine 135 can be determined based on the calculated risk metrics.

In some implementations, for example, the driver classification engine 135 can calculate a first risk metric by calculating first data indicative of an expected distance driven by the driver while ridesharing. In such implementations, the first data can be calculated using the following equation: $\Sigma_i\, P_i D_i$, wherein $P_i$ probability that drive *i* is a ridesharing drive, $T_i$ is the time drive *i* lasted, and $D_i$ is the distance of drive *i.*

Alternatively, or in addition, the driver classification engine 135 can calculate a second risk metric by calculating second data indicative of an expected time driven by the driver while ridesharing. In some implementations, for example, the second data can be calculated using the following equation: $\Sigma_i\, P_i T_i$, wherein $P_i$ probability that drive *i* is a ridesharing drive and $T_i$ is the time drive *i* lasted.

Alternatively, or in addition, the driver classification engine 135 can calculate a third risk metric by calculating third data indicative of an expected fraction of a distance or time spent ridesharing by the driver. In some implementations, for example, the third data can be calculated using the following equation to calculate an expected fraction of a distance spent ridesharing: $(\Sigma_i\, P_i D_i)/(\Sigma_i\, D_i)$, the following equation to calculate an expected fraction of time spent ridesharing: $(\Sigma_i\, P_i T_i)/(\Sigma_i\, T_i)$, or both, wherein $P_i$ probability that drive *i* is a ridesharing drive and $T_i$ is the time drive *i* lasted.

In some implementations, the driver classification engine 135 can classify the driver of vehicle 105 based, at least in part, on one or more of the first data, the second data, or the third data calculated above. In other implementations, the driver classification engine 135 can classify the driver of vehicle 105 based, at least in part, on the first data, the second data, and the third data described above. However, the present disclosure is not limited to these metrics in particular or these combinations of metrics. Instead, other metrics can be calculated using the probability $p_i$ and other drive features described herein to classify a driver into one or more classifications. Once the driver classification determines the classification of the driver of vehicle 105 based on the calculated metrics, data corresponding to the determined classification, the calculated metrics, or both, can be stored in the driver classification database 136 for subsequent access and/or use.

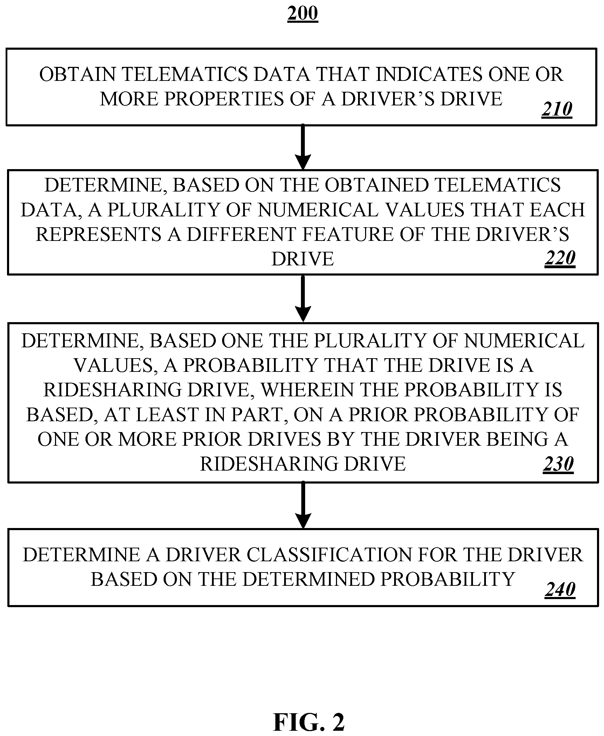

FIG. 2 is a flowchart of a process 200 for detecting ridesharing behavior using telematics data. For convenience, the process 200 will be described as being performed by a server such as application server 130 of FIG. 1.

A server can begin execution of the process 200 by using one or more computers to obtain telematics data that indicates one or more properties of a driver's drive (i) (210). The telematics data can be obtained, for example, from a user device in the driver's vehicle and via one or more networks.

The server can continue execution of the process 200 by using one or more computers to determine based on the obtained telematics data, a plurality of numerical values that each represents a different feature of the driver's drive (i) (220). In some implementations, the plurality of numerical values that each represents a different feature of the driver's drive (i) include two or more numerical values that each correspond to a particular feature of a drive, wherein the features of the drive comprise two or more of road diversity, stop location diversity, stopping mid-block, door slams, mounted user device, mounted user device tapping, time spent at a parked location, user device plugged in for entire trip, end of trip user device tapping, slower driving at end of drive, loop around block, multi-hour shifts, bipartite structure in trip lengths, or average speed.

In some implementations, the server can access historical information associated with prior drives of a driver to determine the one or more of the plurality of numerical values. In some implementations, the server can generate an output vector that includes a plurality of fields, with each field organizing data corresponding to a value of one of the plurality of numerical values.

The server can continue execution of the process 200 by using one or more computers to determine, based on the plurality of numerical values, a probability $(p_i)$ that the drive (i) is a ridesharing drive (230). In some implementations, the determined probability $(p_i)$ can be based, at least in part, on a prior probability $(p_d)$ of one or more prior drives by the driver being a ridesharing trip. For example, in some implementations, the probability $(p_i)$ can be based on a weighted combination of the plurality of numerical values that each represent a different feature of the drive (i).

The server can continue execution of the process 200 using one or more computers to determine a driver classification for the driver based on the probability $(p_i)$ (240). In some implementations, determining a classification for the driver can include a determination as to whether the driver is to be associated with a heightened level of risk based one or more additional features of the driver's drive (i). The one or more additional features of the driver's drive (i) can include an idle time value. In some implementations, the driver classifications can include a ridesharing driver classification and a non-ridesharing driver classification. In other implementations, the driver classifications can include a high-risk classification, a moderate risk classification, or a low-risk classification. In yet other implementations, the driver classifications can include a high-risk classification and a low-risk classification.

In some implementations, classification of the driver can include the server calculating one or more risk metrics. For example, calculation of a first risk metric can include the server using one or more computers to determine first data indicative of an expected distance driven by the driver while ridesharing. In such implementations, the first data can be determined using the following equation: $\Sigma_i \, P_i D_i$, wherein $P_i$ probability that drive i is a ridesharing drive, $T_i$ is the time drive i lasted, and $D_i$ is the distance of drive i.

Alternatively, or in addition, calculation of a second risk metric can include the server using one or more computers to determine second data indicative of an expected time driven by the driver while ridesharing. In some implementations, for example, the second data can be determined using the following equation: $\Sigma_i \, P_i T_i$, wherein $P_i$ probability that drive i is a ridesharing drive and $T_i$ is the time drive i lasted.

Alternatively, or in addition, calculation of a third risk metric can include the server using one or more computers to determine third data indicative of an expected fraction of a distance or time spent ridesharing by the driver. In some implementations, for example, the third data can be determined using the following equation to determine an expected fraction of a distance spent ridesharing: $(\Sigma_i \, P_i D_i)/(\Sigma_i \, D_i)$, the following equation to determine an expected fraction of time spent ridesharing: $(\Sigma_i \, P_i T_i)/(\Sigma_i \, T_i)$, or both, wherein $P_i$ probability that drive i is a ridesharing drive and $T_i$ is the time drive i lasted.

In some implementations, the driver classification is based, at least in part, on one or more of the first data, the second data, or the third data described above. In other implementations, the driver classification is based, at least in part, on the first data, the second data, and the third data described above. However, the present disclosure is not limited to these metrics in particular or these combinations of metrics. Instead, other metrics can be calculating using the probability $p_i$ and other drive features described herein to classify a driver into one or more classifications.

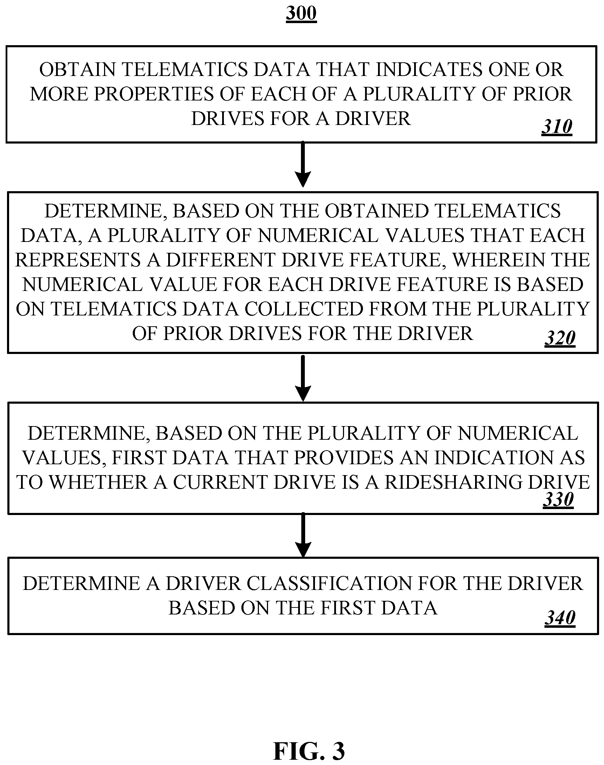

FIG. 3 is a flowchart 300 of another process for detecting ridesharing behavior using telematics data. For convenience, the process 300 will be described as being performed by a server such as application server 130 of FIG. 1.

A server can begin execution of the process 300 by using one or more computers to obtain telematics data that indicates one or more properties of each of a plurality of prior drives for a driver (310).

The server can continue execution of the process 300 by using one or more computers to determine, based on the obtained telematics data, a plurality of numerical values that each represents a different drive feature, wherein the numerical value for each drive feature is based on telematics data collected from the plurality of prior drives for the driver (320).

The server can continue execution of the process 300 by using one or more computers to determine, based on the plurality of numerical values, first data that provides an indication as to whether a current drive ($i$) is a ridesharing drive (330).

The server can continue execution of the process 300 by using one or more computers to determine a driver classification for the driver based on the first data (340).

In some implementations, the first data is a probability ($p_i$) that the current drive ($i$) is a ridesharing drive. However, there is no requirement that the first data be a probability. Instead, in some implementations, the first data can be a numerical value that, when applied to one or more thresholds, provides an indication as to whether the current drive ($i$) is a ridesharing drive.

In some implementations, the probability ($p_i$) is based, at least in part, on a prior probability ($p_d$) that one or more of the prior drives by the driver was a ridesharing drive.

In some implementations, the probability ($p_i$) is based on a weighted combination of the plurality of numerical values that each represent a different feature of the current drive ($i$).

In some implementations, the server can continue execution of the process 300 by using one or more computers to determine second data indicative of an expected distance driven by the driver while ridesharing, determine third data indicative of an expected time driven by the driver while ridesharing, or determine fourth data indicative of an expected fraction of a distance or time spent ridesharing by the driver.

In some implementations, the driver classification is based, at least in part, on one or more of the second data, the third data, or the fourth data.

In some implementations, the plurality of numerical values that each represents a different feature of the driver's drive (i) include two or more numerical values that each correspond to a particular feature of a drive, wherein the features of the drive comprise two or more of road diversity, stop location diversity, stopping mid-block, door slams, mounted user device, mounted user device tapping, time spent at a parked location, user device plugged in for entire trip, end of trip user device tapping, slower driving at end of drive, loop around block, multi-hour shifts, bipartite structure in trip lengths, or average speed.

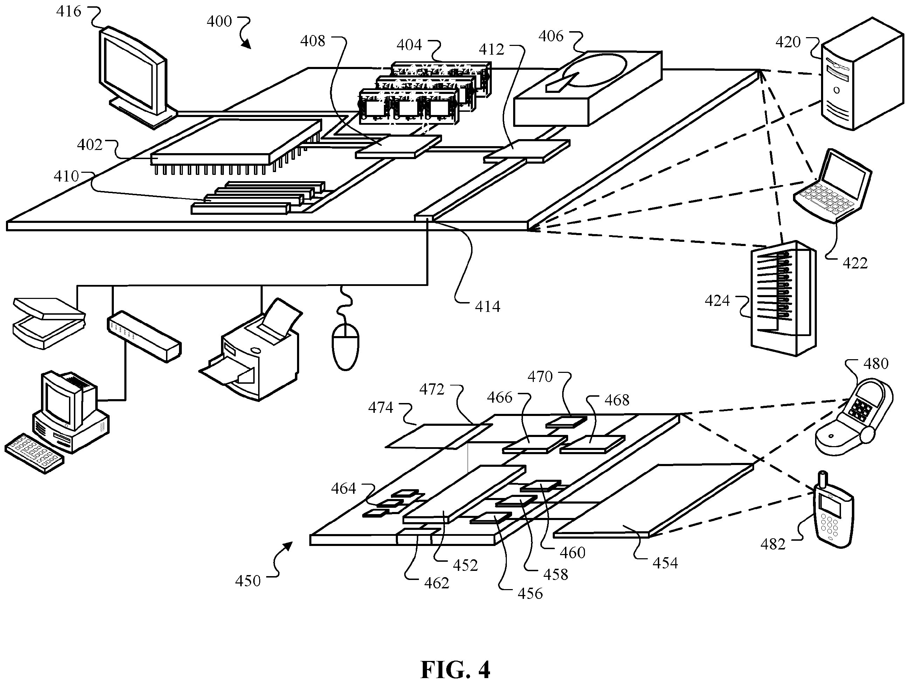

FIG. 4 is a block diagram 400 of system components that can be used to implement a system for detecting ridesharing behavior.

Computing device 400 is intended to represent various forms of digital computers, such as laptops, desktops, workstations, personal digital assistants, servers, blade servers, mainframes, and other appropriate computers. Computing device 450 is intended to represent various forms of mobile devices, such as personal digital assistants, cellular telephones, smartphones, and other similar computing devices. Additionally, computing device 400 or 450 can include Universal Serial Bus (USB) flash drives. The USB flash drives can store operating systems and other applications. The USB flash drives can include input/output components, such as a wireless transmitter or USB connector that can be inserted into a USB port of another computing device. The components shown here, their connections and relationships, and their functions, are meant to be exemplary only, and are not meant to limit implementations of the inventions described and/or claimed in this document.

Computing device 400 includes a processor 402, memory 404, a storage device 406, a high-speed interface 408 connecting to memory 404 and high-speed expansion ports 410, and a low speed interface 412 connecting to low speed bus 414 and storage device 406. Each of the components 402, 404, 406, 408, 410, and 412, are interconnected using various busses, and can be mounted on a common motherboard or in other manners as appropriate. The processor 402 can process instructions for execution within the computing device 400, including instructions stored in the memory 404 or on the storage device 406 to display graphical information for a GUI on an external input/output device, such as display 416 coupled to high speed interface 408. In other implementations, multiple processors and/or multiple buses can be used, as appropriate, along with multiple memories and types of memory. Also, multiple computing devices 400 can be connected, with each device providing portions of the necessary operations, e.g., as a server bank, a group of blade servers, or a multi-processor system.

The memory 404 stores information within the computing device 400. In one implementation, the memory 404 is a volatile memory unit or units. In another implementation, the memory 404 is a non-volatile memory unit or units. The memory 404 can also be another form of computer-readable medium, such as a magnetic or optical disk.

The storage device 406 is capable of providing mass storage for the computing device 400. In one implementation, the storage device 406 can be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product can also contain instructions that, when executed, perform one or more methods, such as those described above. The information carrier is a computer- or machine-readable medium, such as the memory 404, the storage device 406, or memory on processor 402.

The high speed controller 408 manages bandwidth-intensive operations for the computing device 400, while the low speed controller 412 manages lower bandwidth intensive operations. Such allocation of functions is exemplary only. In one implementation, the high-speed controller 408 is coupled to memory 404, display 416, e.g., through a graphics processor or accelerator, and to high-speed expansion ports 410, which can accept various expansion cards (not shown). In the implementation, low-speed controller 412 is coupled to storage device 406 and low-speed expansion port 414. The low-speed expansion port, which can include various communication ports, e.g., USB, Bluetooth, Ethernet, wireless Ethernet can be coupled to one or more input/output devices, such as a keyboard, a pointing device, microphone/speaker pair, a scanner, or a networking device such as a switch or router, e.g., through a network adapter. The computing device 400 can be implemented in a number of different forms, as shown in the figure. For example, it can be implemented as a standard server 420, or multiple times in a group of such servers. It can also be implemented as part of a rack server system 424. In addition, it can be implemented in a personal computer such as a laptop computer 422. Alternatively, components from computing device 400 can be combined with other components in a mobile device (not shown), such as device 450. Each of such devices can contain one or more of computing device 400, 450, and an entire system can be made up of multiple computing devices 400, 450 communicating with each other.

The computing device 400 can be implemented in a number of different forms, as shown in the figure. For example, it can be implemented as a standard server 420, or multiple times in a group of such servers. It can also be implemented as part of a rack server system 424. In addition, it can be implemented in a personal computer such as a laptop computer 422. Alternatively, components from computing device 400 can be combined with other components in a mobile device (not shown), such as device 450. Each of such devices can contain one or more of computing device 400, 450, and an entire system can be made up of multiple computing devices 400, 450 communicating with each other

Computing device 450 includes a processor 452, memory 464, and an input/output device such as a display 454, a communication interface 466, and a transceiver 468, among other components. The device 450 can also be provided with a storage device, such as a micro-drive or other device, to provide additional storage. Each of the components 450, 452, 464, 454, 466, and 468, are interconnected using various buses, and several of the components can be mounted on a common motherboard or in other manners as appropriate.

The processor 452 can execute instructions within the computing device 450, including instructions stored in the memory 464. The processor can be implemented as a chipset of chips that include separate and multiple analog and digital processors. Additionally, the processor can be implemented using any of a number of architectures. For example, the processor 410 can be a CISC (Complex Instruction Set Computers) processor, a RISC (Reduced Instruction Set Computer) processor, or a MISC (Minimal Instruction Set Computer) processor. The processor can provide, for example, for coordination of the other components of the device 450, such as control of user interfaces, applications run by device 450, and wireless communication by device 450.

Processor 452 can communicate with a user through control interface 458 and display interface 456 coupled to a display 454. The display 454 can be, for example, a TFT (Thin-Film-Transistor Liquid Crystal Display) display or an OLED (Organic Light Emitting Diode) display, or other appropriate display technology. The display interface 456 can comprise appropriate circuitry for driving the display 454 to present graphical and other information to a user. The control interface 458 can receive commands from a user and convert them for submission to the processor 452. In addition, an external interface 462 can be provide in communication with processor 452, so as to enable near area communication of device 450 with other devices. External interface 462 can provide, for example, for wired communication in some implementations, or for wireless communication in other implementations, and multiple interfaces can also be used.

The memory 464 stores information within the computing device 450. The memory 464 can be implemented as one or more of a computer-readable medium or media, a volatile memory unit or units, or a non-volatile memory unit or units. Expansion memory 474 can also be provided and connected to device 450 through expansion interface 472, which can include, for example, a SIMM (Single In Line Memory Module) card interface. Such expansion memory 474 can provide extra storage space for device 450, or can also store applications or other information for device 450. Specifically, expansion memory 474 can include instructions to carry out or supplement the processes described above, and can include secure information also. Thus, for example, expansion memory 474 can be provide as a security module for device 450, and can be programmed with instructions that permit secure use of device 450. In addition, secure applications can be provided via the SIMM cards, along with additional information, such as placing identifying information on the SIMM card in a non-hackable manner.

The memory can include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 464, expansion memory 474, or memory on processor 452 that can be received, for example, over transceiver 468 or external interface 462.

Device 450 can communicate wirelessly through communication interface 466, which can include digital signal processing circuitry where necessary. Communication interface 466 can provide for communications under various modes or protocols, such as GSM voice calls, SMS, EMS, or MMS messaging, CDMA, TDMA, PDC, WCDMA, CDMA2000, or GPRS, among others. Such communication can occur, for example, through radio-frequency transceiver 468. In addition, short-range communication can occur, such as using a Bluetooth, Wi-Fi, or other such transceiver (not shown). In addition, GPS (Global Positioning System) receiver module 470 can provide additional navigation- and location-related wireless data to device 450, which can be used as appropriate by applications running on device 450.

Device 450 can also communicate audibly using audio codec 460, which can receive spoken information from a user and convert it to usable digital information. Audio codec 460 can likewise generate audible sound for a user, such as through a speaker, e.g., in a handset of device 450. Such sound can include sound from voice telephone calls, can include recorded sound, e.g., voice messages, music files, etc. and can also include sound generated by applications operating on device 450.

The computing device 450 can be implemented in a number of different forms, as shown in the figure. For example, it can be implemented as a cellular telephone 480. It can also be implemented as part of a smartphone 482, personal digital assistant, or other similar mobile device.

Various implementations of the systems and methods described here can be realized in digital electronic circuitry, integrated circuitry, specially designed ASICs (application specific integrated circuits), computer hardware, firmware, software, and/or combinations of such implementations. These various implementations can include implementation in one or more computer programs that are executable and/or interpretable on a programmable system including at least one programmable processor, which can be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" "computer-readable medium" refers to any computer program product, apparatus and/or device, e.g., magnetic discs, optical disks, memory, Programmable Logic Devices (PLDs), used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device, e.g., a CRT (cathode ray tube) or LCD (liquid crystal display) monitor for displaying information to the user and a keyboard and a pointing device, e.g., a mouse or a trackball by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The systems and techniques described here can be implemented in a computing system that includes a back end component, e.g., as a data server, or that includes a middleware component, e.g., an application server, or that includes a front end component, e.g., a client computer having a graphical user interface or a Web browser through which a user can interact with an implementation of the systems and techniques described here, or any combination of such back end, middleware, or front end components. The components of the system can be interconnected by any form or medium of digital data communication, e.g., a communication network. Examples of communication networks include a local area network ("LAN"), a wide area network ("WAN"), and the Internet.

The computing system can include clients and servers. A client and server are generally remote from each other and typically interact through a communication network. The relationship of client and server arises by virtue of computer programs running on the respective computers and having a client-server relationship to each other.

## EMBODIMENTS:

1. A method for detecting ridesharing behavior comprising:

    obtaining, by one or more computers, telematics data that indicates one or more properties of each of a plurality of prior drives for a driver;
    determining, by one or more computers and based on the obtained telematics data, a plurality of numerical values that each represents a different drive feature, wherein the numerical value for each drive feature is based on telematics data collected from the plurality of prior drives for the driver;
    determining, by one or more computers and based on the plurality of numerical values, first data that provides an indication as to whether a current drive (*i*) is a ridesharing drive; and
    determining, by one or more computers, a driver classification for the driver based on the first data.

2. The method of embodiment 1, wherein the first data is a probability ($p_i$) that the current drive ($i$) is a ridesharing drive.

3. The method of embodiment 1, wherein the first data is a numerical value that, when applied to one or more thresholds, provides an indication as to whether the current drive ($i$) is a ridesharing drive.

4. The method of embodiment 2, wherein the probability ($p_i$) is based, at least in part, on a prior probability ($p_d$) that one or more of the prior drives by the driver was a ridesharing drive.

5. The method of embodiment 2, wherein the probability ($p_i$) is based on a weighted combination of the plurality of numerical values that each represent a different feature of the current drive ($i$).

6. The method of embodiment 1, the method further comprising one or more of:

   determining, by one or more computers, second data indicative of an expected distance driven by the driver while ridesharing;
   determining, by one or more computers, third data indicative of an expected time driven by the driver while ridesharing; or
   determining, by one or more computers, fourth data indicative of an expected fraction of a distance or time spent ridesharing by the driver.

7. The method of embodiment 6, wherein the driver classification is based, at least in part, on one or more of the second data, the third data, or the fourth data.

8. The method of embodiment 1, wherein the plurality of numerical values that each represents a different feature of the driver's drive (i) include two or more numerical values that each correspond to a particular feature of a drive, wherein the features of the drive comprise two or more of road diversity, stop location diversity, stopping mid-block, door slams, mounted user device, mounted user device tapping, time spent at a parked location, user device plugged in for entire trip, end of trip user device tapping, slower driving at end of drive, loop around block, multi-hour shifts, bipartite structure in trip lengths, or average speed.

9. A system for detecting ridesharing behavior comprising:

   one or more computers; and
   one or more computer-readable media storing instructions that, when executed by the one or more computers, cause the one or more computers to perform operations, the operations comprising:

      obtaining, by the one or more computers, telematics data that indicates one or more properties of each of a plurality of prior drives for a driver;
      determining, by the one or more computers and based on the obtained telematics data, a plurality of numerical values that each represents a different drive feature, wherein the numerical value for each drive feature is based on telematics data collected from the plurality of prior drives for the driver;
      determining, by the one or more computers and based on the plurality of numerical values, first data that provides an indication as to whether a current drive ($i$) is a ridesharing drive; and
      determining, by the one or more computers, a driver classification for the driver based on the first data.

10. The system of embodiment 9, wherein the first data is a probability ($p_i$) that the current drive ($i$) is a ridesharing drive.

11. The system of embodiment 9, wherein the first data is a numerical value that, when applied to one or more thresholds, provides an indication as to whether the current drive ($i$) is a ridesharing drive.

12. The system of embodiment 10, wherein the probability ($p_i$) is based, at least in part, on a prior probability ($p_d$) that one or more of the prior drives by the driver was a ridesharing drive.

13. The system of embodiment 10, wherein the probability ($p_i$) is based on a weighted combination of the plurality of numerical values that each represent a different feature of the current drive ($i$).

14. The system of embodiment 9, the operations further comprising one or more of:

   determining, by the one or more computers, second data indicative of an expected distance driven by the driver while ridesharing;
   determining, by the one or more computers, third data indicative of an expected time driven by the driver while ridesharing; or
   determining, by the one or more computers, fourth data indicative of an expected fraction of a distance or time spent ridesharing by the driver.

15. The system of embodiment 14, wherein the driver classification is based, at least in part, on one or more of the second data, the third data, or the fourth data.

16. The system of embodiment 9, wherein the plurality of numerical values that each represents a different feature of the driver's drive (i) include two or more numerical values that each correspond to a particular feature of a drive, wherein the features of the drive comprise two or more of road diversity, stop location diversity, stopping mid-block, door slams, mounted user device, mounted user device tapping, time spent at a parked location, user device plugged in for entire trip, end of trip user device tapping, slower driving at end of drive, loop around block, multi-hour shifts, bipartite structure in trip lengths, or average speed.

17. One or more computer-readable storage medium storing instructions that, when executed by one or more computers, cause the one or more computers to perform operations, the operations comprising:

obtaining telematics data that indicates one or more properties of each of a plurality of prior drives for a driver;
determining, based on the obtained telematics data, a plurality of numerical values that each represents a different drive feature, wherein the numerical value for each drive feature is based on telematics data collected from the plurality of prior drives for the driver;
determining, based on the plurality of numerical values, first data that provides an indication as to whether a current drive ($i$) is a ridesharing drive; and
determining a driver classification for the driver based on the first data.

18. The computer-readable storage medium of embodiment 17, wherein the first data is a probability ($p_i$) that the current drive ($i$) is a ridesharing drive.

19. The computer-readable storage medium of embodiment 17, the operations further comprising one or more of:

determining second data indicative of an expected distance driven by the driver while ridesharing;
determining third data indicative of an expected time driven by the driver while ridesharing; or
determining fourth data indicative of an expected fraction of a distance or time spent ridesharing by the driver;
wherein the driver classification is based, at least in part, on one or more of the second data, the third data, or the fourth data.

20. The computer-readable storage medium of embodiment 17, wherein the plurality of numerical values that each represents a different feature of the driver's drive (i) include two or more numerical values that each correspond to a particular feature of a drive, wherein the features of the drive comprise two or more of road diversity, stop location diversity, stopping mid-block, door slams, mounted user device, mounted user device tapping, time spent at a parked location, user device plugged in for entire trip, end of trip user device tapping, slower driving at end of drive, loop around block, multi-hour shifts, bipartite structure in trip lengths, or average speed.

**Claims**

1. A method for detecting ridesharing behavior comprising:

obtaining, by one or more computers, telematics data that indicates one or more properties of each of a plurality of prior drives for a driver;
determining, by one or more computers and based on the obtained telematics data, a plurality of numerical values that each represents a different drive feature, wherein the numerical value for each drive feature is based on telematics data collected from the plurality of prior drives for the driver;
determining, by one or more computers and based on the plurality of numerical values, first data that provides an indication as to whether a current drive ($i$) is a ridesharing drive; and
determining, by one or more computers, a driver classification for the driver based on the first data.

2. The method of claim 1, wherein the first data is a probability ($p_i$) that the current drive (i) is a ridesharing drive.

3. The method of claim 1, wherein the first data is a numerical value that, when applied to one or more thresholds, provides an indication as to whether the current drive ($i$) is a ridesharing drive.

4. The method of claim 2, wherein the probability ($p_i$) is based, at least in part, on a prior probability ($p_d$) that one or more of the prior drives by the driver was a ridesharing drive.

5. The method of claim 2, wherein the probability ($p_i$) is based on a weighted combination of the plurality of numerical values that each represent a different feature of the current drive ($i$).

6. The method of claim 1, the method further comprising one or more of:

> determining, by one or more computers, second data indicative of an expected distance driven by the driver while ridesharing;
> determining, by one or more computers, third data indicative of an expected time driven by the driver while ridesharing; or
> determining, by one or more computers, fourth data indicative of an expected fraction of a distance or time spent ridesharing by the driver.

7. The method of claim 6, wherein the driver classification is based, at least in part, on one or more of the second data, the third data, or the fourth data.

8. The method of claim 1, wherein the plurality of numerical values that each represents a different feature of the driver's drive (i) include two or more numerical values that each correspond to a particular feature of a drive, wherein the features of the drive comprise two or more of road diversity, stop location diversity, stopping mid-block, door slams, mounted user device, mounted user device tapping, time spent at a parked location, user device plugged in for entire trip, end of trip user device tapping, slower driving at end of drive, loop around block, multi-hour shifts, bipartite structure in trip lengths, or average speed.

9. A system for detecting ridesharing behavior comprising:

> one or more computers; and
> one or more computer-readable media storing instructions that, when executed by the one or more computers, cause the one or more computers to perform operations, the operations comprising:

>> obtaining, by the one or more computers, telematics data that indicates one or more properties of each of a plurality of prior drives for a driver;
>> determining, by the one or more computers and based on the obtained telematics data, a plurality of numerical values that each represents a different drive feature, wherein the numerical value for each drive feature is based on telematics data collected from the plurality of prior drives for the driver;
>> determining, by the one or more computers and based on the plurality of numerical values, first data that provides an indication as to whether a current drive (i) is a ridesharing drive; and
>> determining, by the one or more computers, a driver classification for the driver based on the first data.

10. The system of claim 9, wherein the first data is a probability ($p_i$) that the current drive (i) is a ridesharing drive.

11. The system of claim 9, wherein the first data is a numerical value that, when applied to one or more thresholds, provides an indication as to whether the current drive (i) is a ridesharing drive.

12. The system of claim 10, wherein the probability ($p_i$) is either:

> based, at least in part, on a prior probability ($p_d$) that one or more of the prior drives by the driver was a ridesharing drive; or
> based on a weighted combination of the plurality of numerical values that each represent a different feature of the current drive (i).

13. The system of claim 9, the operations further comprising one or more of:

> determining, by the one or more computers, second data indicative of an expected distance driven by the driver while ridesharing;
> determining, by the one or more computers, third data indicative of an expected time driven by the driver while ridesharing; or
> determining, by the one or more computers, fourth data indicative of an expected fraction of a distance or time spent ridesharing by the driver, and
> optionally wherein the driver classification is based, at least in part, on one or more of the second data, the third data, or the fourth data.

14. The system of claim 9, wherein the plurality of numerical values that each represents a different feature of the driver's drive (i) include two or more numerical values that each correspond to a particular feature of a drive, wherein the features of the drive comprise two or more of road diversity, stop location diversity, stopping mid-block, door slams, mounted user device, mounted user device tapping, time spent at a parked location, user device plugged in for entire trip, end of trip user device tapping, slower driving at end of drive, loop around block, multi-hour shifts, bipartite structure in trip lengths, or average speed.

15. One or more computer-readable storage medium storing instructions that, when executed by one or more computers, cause the one or more computers to perform operations, the operations comprising the method of any one of claims 1 to 8.

FIG. 1

## 200

```
OBTAIN TELEMATICS DATA THAT INDICATES ONE OR
MORE PROPERTIES OF A DRIVER'S DRIVE      210
```

```
DETERMINE, BASED ON THE OBTAINED TELEMATICS
DATA, A PLURALITY OF NUMERICAL VALUES THAT EACH
REPRESENTS A DIFFERENT FEATURE OF THE DRIVER'S
DRIVE                        220
```

```
DETERMINE, BASED ONE THE PLURALITY OF NUMERICAL
VALUES, A PROBABILITY THAT THE DRIVE IS A
RIDESHARING DRIVE, WHEREIN THE PROBABILITY IS
BASED, AT LEAST IN PART, ON A PRIOR PROBABILITY OF
ONE OR MORE PRIOR DRIVES BY THE DRIVER BEING A
RIDESHARING DRIVE                230
```

```
DETERMINE A DRIVER CLASSIFICATION FOR THE DRIVER
BASED ON THE DETERMINED PROBABILITY      240
```

**FIG. 2**

**300**

```
┌─────────────────────────────────────────────────┐
│  OBTAIN TELEMATICS DATA THAT INDICATES ONE OR    │
│  MORE PROPERTIES OF EACH OF A PLURALITY OF PRIOR │
│  DRIVES FOR A DRIVER                      310    │
└─────────────────────────────────────────────────┘
                        │
                        ▼
┌─────────────────────────────────────────────────┐
│  DETERMINE, BASED ON THE OBTAINED TELEMATICS     │
│  DATA, A PLURALITY OF NUMERICAL VALUES THAT EACH │
│  REPRESENTS A DIFFERENT DRIVE FEATURE, WHEREIN THE│
│  NUMERICAL VALUE FOR EACH DRIVE FEATURE IS BASED │
│  ON TELEMATICS DATA COLLECTED FROM THE PLURALITY │
│  OF PRIOR DRIVES FOR THE DRIVER           320    │
└─────────────────────────────────────────────────┘
                        │
                        ▼
┌─────────────────────────────────────────────────┐
│  DETERMINE, BASED ON THE PLURALITY OF NUMERICAL  │
│  VALUES, FIRST DATA THAT PROVIDES AN INDICATION AS│
│  TO WHETHER A CURRENT DRIVE IS A RIDESHARING DRIVE│
│                                           330    │
└─────────────────────────────────────────────────┘
                        │
                        ▼
┌─────────────────────────────────────────────────┐
│  DETERMINE A DRIVER CLASSIFICATION FOR THE DRIVER│
│  BASED ON THE FIRST DATA                         │
│                                           340    │
└─────────────────────────────────────────────────┘
```

**FIG. 3**

**FIG. 4**

EP 4 379 645 A1

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/294327 A1 (KAWASHIMA KIYOTAKA [US] ET AL) 17 September 2020 (2020-09-17) * paragraph [0006] – paragraph [0057] * * figures 5,6 * | 1-15 | INV. G06Q50/43 G07C5/00 G07C5/08 G06Q50/40 |
| A | EP 4 012 643 A1 (AIOI NISSAY DOWA INSURANCE CO LTD [JP]) 15 June 2022 (2022-06-15) * paragraph [0019] * | 1-15 | |
| A | US 10 733 672 B1 (BERNSTEIN DANIEL CAREY [US] ET AL) 4 August 2020 (2020-08-04) * paragraph [0021] * | 1-15 | |
| A | US 2022/318920 A1 (TUCKER BENJAMIN J [US] ET AL) 6 October 2022 (2022-10-06) * paragraph [0042] * | 1-15 | |

TECHNICAL FIELDS
SEARCHED      (IPC)

G07C
G06Q

The present search report has been drawn up for all claims

| Place of search | Date of completion of the search | Examiner |
|---|---|---|
| Munich | 9 January 2024 | Radovic, Dusica |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons
.................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 23 21 3050

This annex lists the patent family members relating to the patent documents cited in the above-mentioned European search report.
The members are as contained in the European Patent Office EDP file on
The European Patent Office is in no way liable for these particulars which are merely given for the purpose of information.

09-01-2024

| Patent document cited in search report | | Publication date | Patent family member(s) | | Publication date |
|---|---|---|---|---|---|
| US 2020294327 | A1 | 17-09-2020 | NONE | | |
| EP 4012643 | A1 | 15-06-2022 | EP | 4012643 A1 | 15-06-2022 |
| | | | JP | 6716150 B1 | 01-07-2020 |
| | | | JP | 2021026669 A | 22-02-2021 |
| | | | US | 2022414782 A1 | 29-12-2022 |
| | | | WO | 2021024633 A1 | 11-02-2021 |
| US 10733672 | B1 | 04-08-2020 | US | 10733672 B1 | 04-08-2020 |
| | | | US | 11734766 B1 | 22-08-2023 |
| US 2022318920 | A1 | 06-10-2022 | US | 2022318920 A1 | 06-10-2022 |
| | | | US | 2022318921 A1 | 06-10-2022 |

EPO FORM P0459

For more details about this annex : see Official Journal of the European Patent Office, No. 12/82